# EUROPEAN PATENT APPLICATION

(11) **EP 4 607 332 A1**
(43) Date of publication of application: **27.08.2025**
(21) Application number: 24158697.3
(22) Date of filing: 20.02.2024
(51) Int. Cl.: G06F 3/12

(54) **CONTROLLING A PRINTING SYSTEM USING THE PRINT QUEUE**

(71) Applicant: Canon Production Printing Holding B.V., 5914 HH Venlo (NL)
(72) Inventor: PASLARU, Dorin C., Venlo (NL); VULPE, Radu, Venlo (NL)
(74) Representative: Canon Production Printing IP Department

(57) **Abstract**

The method comprises the step of detecting in the print queue of a printer a pre-processing or post-processing action of a first print job which is followed by a pre-processing or post-processing action of a second print job succeeding the first print job, wherein the pre-processing or post-processing action of the first print job and the pre-processing or post-processing action of the second print job are suitable to be combined in at least zero combination actions which take less time and/or waste than a total of said two combinable actions. The pre-processing or post-processing action of the first job and the pre-processing or post-processing action of the second job are replaced by the at least zero combination actions in the print queue while taking the less time and/or waste of the at least zero combined actions into account, and the visualization of the print queue is adapted accordingly.

## Description

### BACKGROUND OF THE INVENTION

The invention relates to a method for managing a printer that comprises a print queue of print jobs which are created by specifying for each print job print data, a set of pre-processing parameters, and a set of post-processing parameters, and the print queue comprises for each print job besides the print action pre-processing actions and post-processing actions determined by the set of pre-processing parameters and the set of post-processing parameters respectively. The method comprises the step of displaying a visualization of the print queue comprising for each print job in the print queue a time sequence of the at least zero pre-processing actions being succeeded by a printing action being succeeded by the at least zero post-processing actions.

Present-day production printers allow the pre-programming of multiple print jobs for thereby printing such jobs in unattended operation on the level of a separate print job. The operator should keep the queue in condition for maintaining maximum throughput. The term "printer" as used herein refers to any kind of digital printer like a continuous feed printer, a roll to roll printer, a cut sheet printer or a flatbed printer.

The printer allows for redefining system parameters or printing parameters between the execution of successive print jobs, even after such printing jobs have been specified. As disclosed in US 6863455 and US 10394502 an event image object is introduced in a visualization of the print job queue and defined as a digital object which is a user operable element. The image represents an event which may be an operator event or an apparatus event. By allowing the operator to plan interventions by means of the event image objects, an image quality of the printed images and a production progress on the printing apparatus may increase. Moreover the operator is able to monitor and control multiple printing apparatuses at the same time.

Since a print job may have a pre-processing action or a post-post-processing action, it may happen that a first job has a pre-processing action or post-processing action defined in the print queue and that a second print job succeeding the first print job has a pre-processing or post-processing action defined in the print queue.

### SUMMARY OF THE INVENTION

In consequence, amongst other things, it is an object of the present invention to make use of pre-processing actions, printing actions and post-processing actions in the print queue in an efficient and sustainable way.

Now therefore, according to one of its aspects, the method according to the present invention is characterised by the steps of detecting in the print queue a pre-processing or post-processing action of a first print job which is followed by a pre-processing or post-processing action of a second print job succeeding the first print job, wherein the pre-processing or post-processing action of the first print job and the pre-processing or post-processing action of the second print job are suitable to be combined in at least zero combination actions which take less time and/or waste than a total of said two combinable actions, replacing the pre-processing or post-processing action of the first job and the pre-processing or post-processing action of the second job by the at least zero combination actions in the print queue while taking the less time and/or waste of the at least zero combined actions into account, and adapting the visualization of the print queue accordingly.

The time which is mentioned hereinabove is time which is used by the printer or time which is used by the operator to perform pre-processing and/or post-processing actions. The waste which is mentioned hereinabove is waste of print medium, waste of inks or waste of finishing material like staples, bundling maps, etc.

The second print may directly succeeding the first job, i.e. there are no print jobs planned between the first print job and the second print job. However, the present invention also applies to cases wherein there are at least one print job scheduled between the first print job and the second print job.

The visualization of the print queue is adapted by displaying at least one combined action in the print queue instead of the pre-processing or post-processing action of the first print job and the pre-processing or post-processing action of the second print job. In case there is no combined action and the pre-processing or post-processing action of the first print job and a pre-processing or post-processing action of the second print job are both removable from the print queue, the visualization of the print queue does not display the pre-processing or post-processing action of the first print job and the pre-processing or post-processing action of the second print job.

According to an embodiment the pre-processing or post-processing action of the first print job and the pre-processing or post-processing action of the second print job obviate each other, and the method comprises the steps of removing the pre-processing or post-processing action of the first print job from the print queue, removing the pre-processing or post-processing action of the second print job from the print queue. The visualization is adapted by not displaying the removed pre-processing or post-processing action of the first print job and the removed pre-processing or post-processing action of the second print job.

According to a further embodiment the printer is a flatbed printer and the post-processing action of the first print job is a removal of a jig from a print table of the flatbed printer and the pre-processing action of the second job is a preparation of a same jig on the print table of the flatbed printer. Since the print controller is configured to compare the needed jig for the first print job with the needed jig of the second print job, the print controller can detect that the needed jigs are the same making both the removal of the jig and the preparation of the same jig superfluous action which can be removed from the print queue.

According to an embodiment the pre-processing or post-processing action of the first print job and the pre-processing or post-processing action of the second print job obviate are equal, and the method comprises the steps of removing either the pre-processing or post-processing action of the second print job from the print queue or the pre-processing or post-processing action of the first print job from the print queue. The visualization is adapted by not displaying either the removed pre-processing post-processing action of the first print job or the removed pre-processing or post-processing action of the second print job.

According to an embodiment the pre-processing or post-processing action of the first print job and the pre-processing or post-processing action of the second print job are suitable to be combined in at least one combined action that takes less time and/or less waste, and the method comprises the step of combining the pre-processing or post-processing action of the first print job with the pre-processing or post-processing action of the second print job in the at least one combined action. The visualization is adapted by displaying the at least one combined action instead of the pre-processing post-processing action of the first print job and the pre-processing or post-processing action of the second print job.

According to an embodiment the method comprises the step of displaying near the visualization of the print queue an advice for the operator or user of the printing system in order to confirm or to refute the replacement of the pre-processing or post-processing action of the first job and the pre-processing or post-processing action of the second job by the at least zero combination actions in the print queue.

According to an embodiment the method comprises the steps of reorganizing the sequence order of the print jobs in the print queue in order to increase the number of combinable pre-processing or post-processing actions of print jobs in the print queue.

The present invention also relates to a printer control mechanism, to a printer server facility, and to a printer, which are arranged for implementing various aspects of the present invention. Further, the invention relates to computer software to be used for programming the system controller to implement the various aspects of the present invention. Other advantageous aspects of the invention are recited in dependent claims.

### BRIEF DESCRIPTION OF THE DRAWINGS

These and further aspects and advantages of the invention will be discussed more in detail hereinafter with reference to the disclosure of preferred embodiments, and in particular with reference to the appended Figures that show:
Fig. 1, a block diagram of a printer in which the invention is implemented;
Fig. 2-8, various screen images used for implementing the present invention;
Fig. 9, a flow diagram o the method according to the present invention; and
Fig. 10, a schematical non-transitory software medium according to the invention. is a schematic drawing of the arrangement of printers and a printer server according to the present invention.

### DETAILED DESCRIPTION OF PREFERRED EMBODIMENTS

The present invention will now be described with reference to the accompanying drawings, wherein the same or similar elements are identified with the same reference numerals throughout the several views.

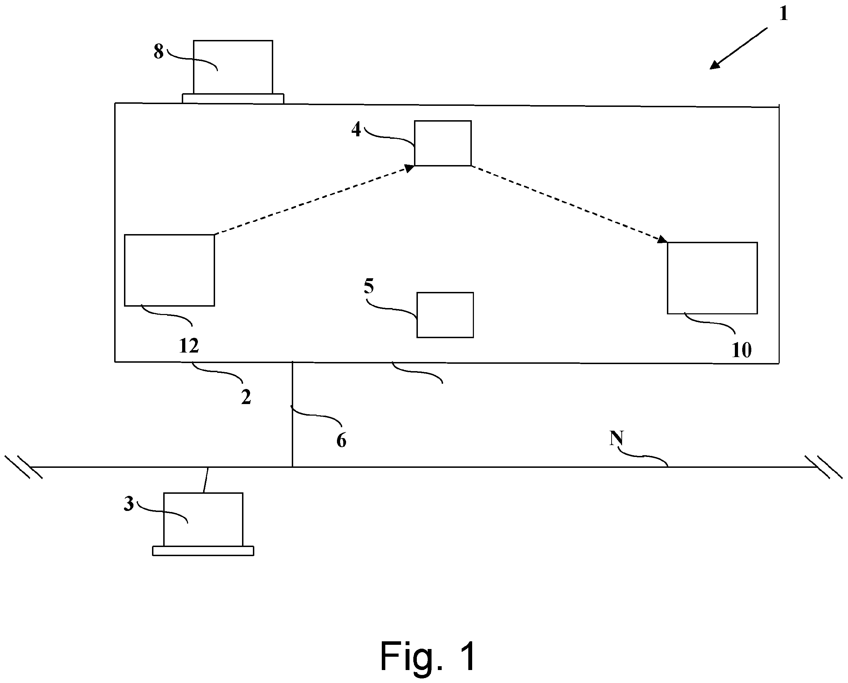

Fig. 1 is a schematic view of a printing system 1 according to the present invention. The printing system 1 is connected to a network N via a data connection 6 and comprises a user interface 8, a media input holder 12 for receiving and holding input of a plurality of sheets or rolls, a media output holder 10 for receiving and holding output of a plurality of sheets or rolls, a print engine 4 and a print controller 5. Printing instructions for the print controller 5 may be part of specifications of a print job received via the network N by the print controller 5. Printing instructions may also be entered via user interface 8 and stored in the printer memory of the print controller 5. The print jobs are created by specifying for each print job print data, a set of pre-processing parameters, and a set of post-processing parameters.

The data connection 6 may be a communication cable, a wireless connection, infrared beams or any other data communication means. Before the plurality of sheets or rolls is printed upon by the print engine 4, the digital information comprising print data and printing instructions is taken into account when the printing of the plurality of sheets of rolls is starting. The sheets are transported from the media input holder 12 along the print engine 4 to the media output holder 10. A printed sheet or roll can be taken out of the media output holder 10 for further treatment or handling at a measurement location (not shown) like analysis with a spectrophotometer in case of a printed test chart. A workstation 3 may be connected to the network N for submitting the print data of a regular print job or a test print job to the printing system 1.

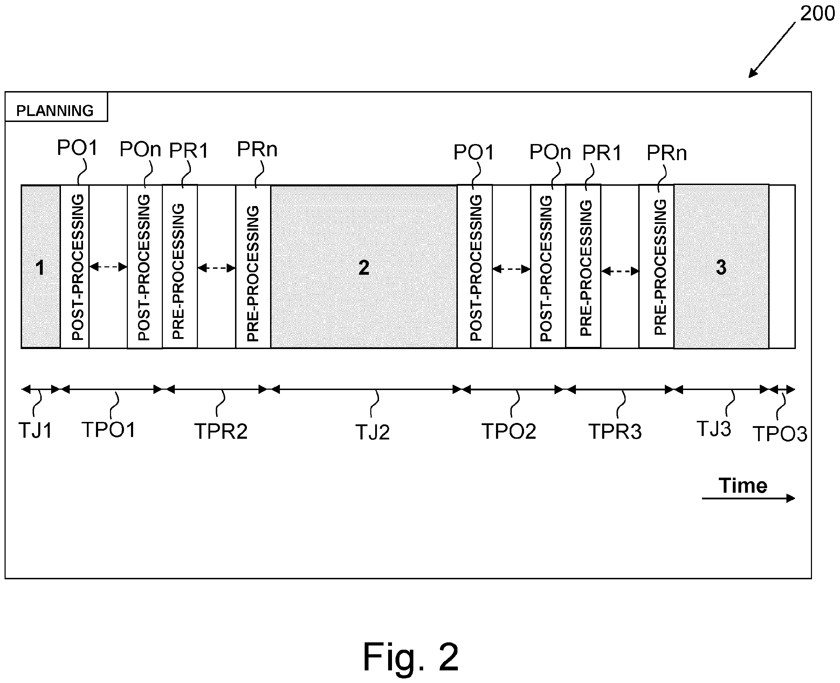

Fig. 2 illustrates a user interface screen 200 to be displayed at the user interface 8 of the printing system 1 shown in Fig. 1. The user interface screen 200 displays a visualization of the print queue of the printing system 1. When a print job 1, 2, 3 arrives at the print queue, the print controller 5 checks for the pre-processing parameters and the post-processing parameters and establishes and/or derives pre-processing and/or post-processing actions for the print job 1, 2, 3. An operator may also add a pre-processing action or a post-processing action to the print queue shown in user interface window 200.

In this example the print job 1 has post-processing actions PO1 - Pon, the print job 2 has pre-processing actions PR1 - PRn and post-processing actions PO1 - Pon and the print job 3 has pre-processing actions PR1 - PRn.

A time-line in the visualization of the print queue in Fig. 2 corresponds to time periods when the print jobs, the pre-processing actions and the post-processing actions are scheduled in the planning. The time-line comprises the durations TJ1, TJ2, TJ3 of the print jobs 1, 2, 3 respectively, the durations of the pre-processing actions TPR2, TPR3 for print job 2 and 3 and the durations of the post-processing actions TPO1, TPO2, TPO3 for print job 1, 2, 3 respectively.

In Fig. 2 print jobs 1, 2, 3 are shown with their pre-processing actions and their post-processing actions, if any. There may be print jobs in the print queue that do not have any pre-procession action, any post-processing action, or neither both.

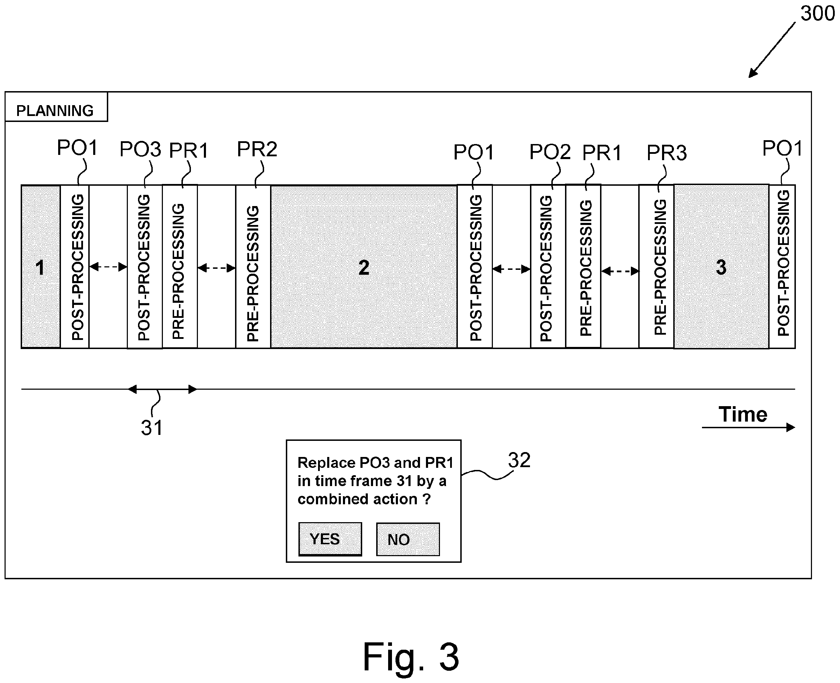

Fig. 3 shows a first example on a user interface screen 300 wherein the print controller 5 has detected that the post-processing action PO3 of print job 1 and the pre-processing action PR1 of print job 2 which are time-framed by time frame 31, are suitable for a combined action that takes less time. A confirmation window 32 is shown on the user interface screen 300 in order to let the operator confirm that a combined action can replace the actions PO3 and PR1 in the time frame 31.

When the operator presses the YES button of the confirmation window 32, the print controller will replace the actions PO3 and PR1 in time frame 31 with a combined action. When the operator presses the NO button of the confirmation window 32, the print controller will leave the print queue as it is. The visualization of the print queue will stay the same as in user interface window 300.

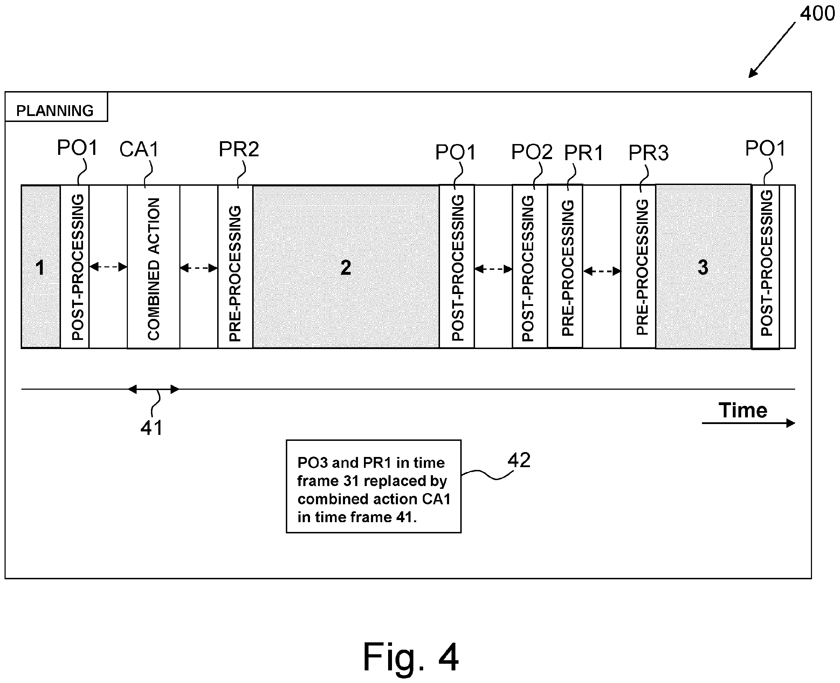

Fig. 4 shows the result of the confirmation (after the YES button of confirmation window 32 is pressed) by the operator on a user interface screen 400. In the visualization of the print queue a combined action CA1 is visible in a time frame 41. The time frame 41 of the combined action CA1 is shorter in time than the time frame 31 of the actions PO3 and PR1 together. In a confirmation window 42 the print controller states that the actions PO3 and PR1 in time frame 31 are replaced by the combined action CA1 in time frame 41.

For example, the post-processing action PO3 is a cleaning of the white ink reservoir used and the next job needs white ink in a low quality, for example as an underground layer in a multi-layer print job. The cleaning of the white ink reservoir and flushing of the white ink may be replaced by using the white ink for the complete underground layer of the next job.

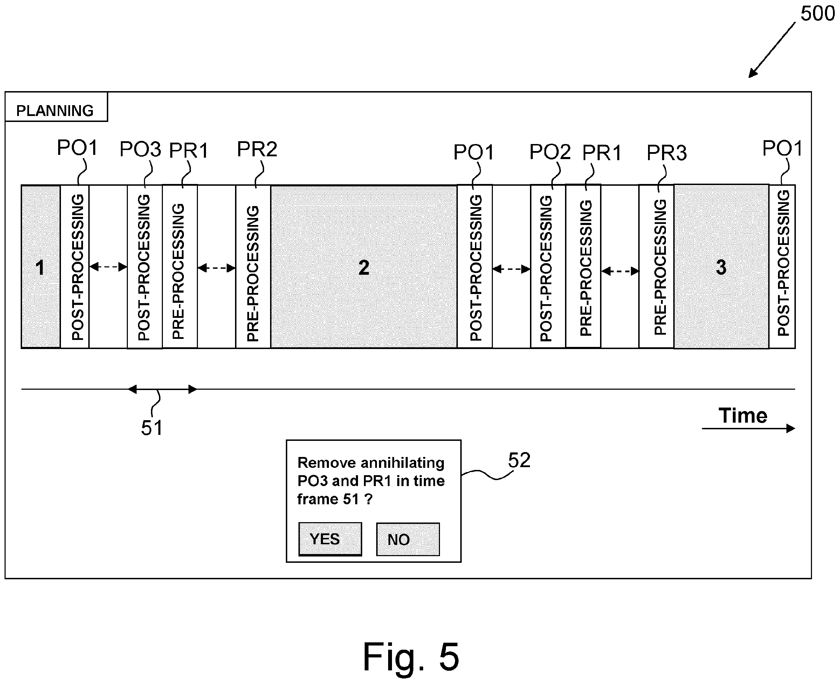

Fig. 5 shows a second example on a user interface screen 500 wherein the print controller 5 has detected that the post-processing action PO3 of print job 1 and the pre-processing action PR1 of print job 2 which are time-framed by time frame 51, are obviating or annihilating each other. A confirmation window 52 is shown on the user interface screen 500 in order to let the operator confirm a removal of both actions PO3 and PR1 in the time frame 51.

When the operator presses the YES button of the confirmation window 52, the print controller will replace the actions PO3 and PR1 in time frame 31 with a combined action. When the operator presses the NO button of the confirmation window 52, the print controller will leave the print queue as it is. The visualization of the print queue will stay the same as in user interface window 500.

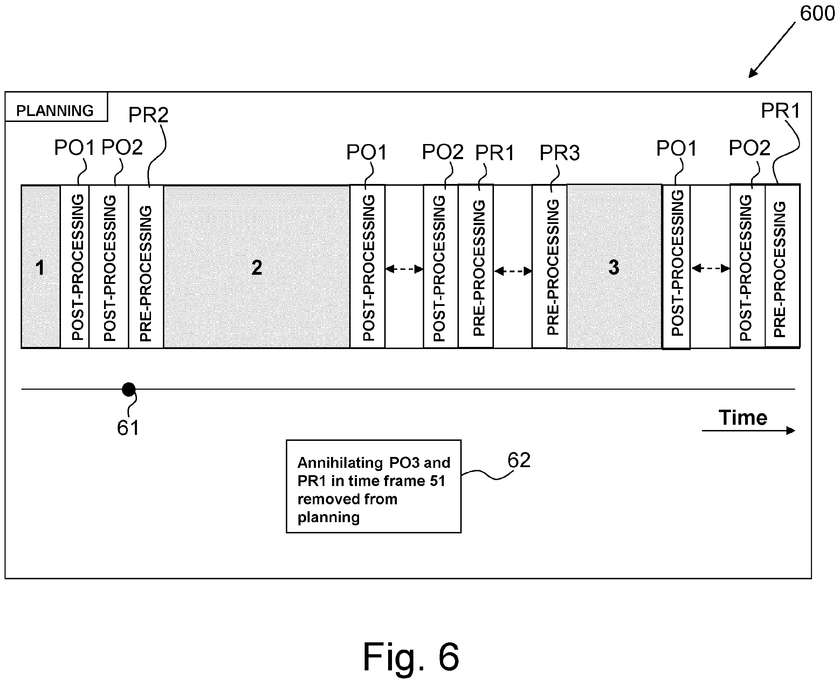

Fig. 6 shows the result of the confirmation (after the YES button of confirmation window 32 is pressed) by the operator on a user interface screen 600. In the visualization of the print queue the actions PO3 and PR1 in time frame 51 are removed from the print queue as indicated by the time dot 61.

In a confirmation window 62 the print controller states that the actions PO3 and PR1 in time frame 51 are removed from the planning, i.e. the print queue.

The post-processing action PO3 may be a removal of a print media from the media input holder 12 shown in Fig. 1 and the pre-processing action PR1 may be an addition of the same print media to the same media input holder.

The post-processing action PO3 may be a removal of a router from a cutter flatbed for cutting the print medium after printing and the pre-processing action PR1 may be an addition of the same router to the same cutter flatbed.

The post-processing action PO3 may be a removal of special inks, for example fluorescent or metallic inks) or a spot colour from the printer 1 shown in Fig. 1 and a cleaning and/or flushing of the whole ink system and the pre-processing action PR1 may be an addition of the same special inks.

According to an embodiment the printer is a flatbed printer and the post-processing action PO3 of the first print job is a removal of a jig from a print table of the flatbed printer and the pre-processing action PR1 of the second job is a preparation of a same jig on the print table of the flatbed printer. When planning the print jobs, the setup and post processing time, besides printing time, has to be taken into consideration. For rigid items a specific jig has to pe prepared on the printer table for the items to be precisely registered. The removal of the actions PO3 and PR1 optimizes the planning by detecting if the items which are to be placed in the jig have the same dimensions and a change of the jig is not necessary any more. The print controller may take into account if by rotating the jig will occupy the same space on the printing table. The print controller may also search and suggest print jobs from the print queue to be batched together if they match a specific criterion. By removing the actions PO3 and PR 1 in the production workflow a lot of time is saved.

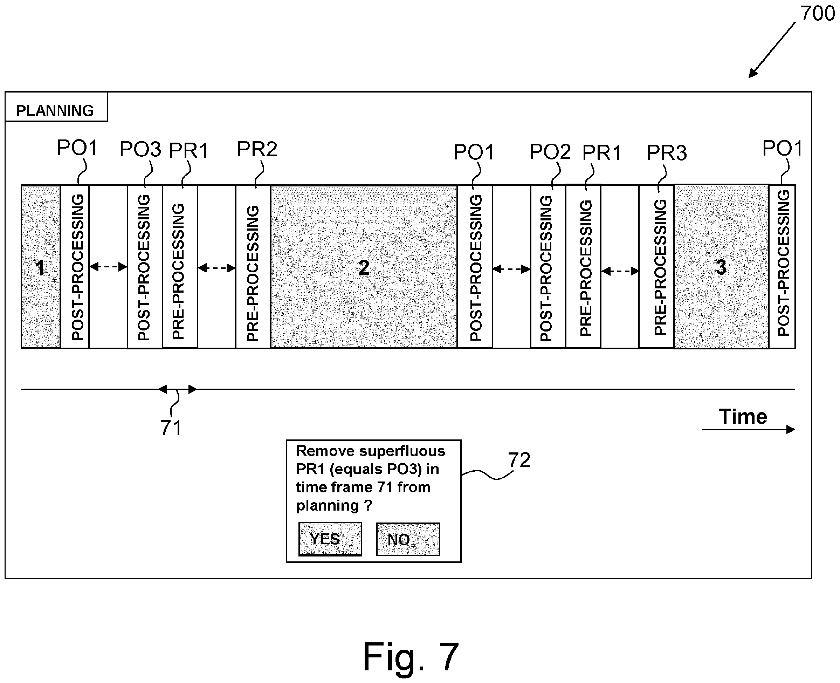

Fig. 7 shows a third example on a user interface screen 700 wherein the print controller 5 has detected that the post-processing action PO3 of print job 1 and the pre-processing action PR1 of print job 2 which is time-framed by time frame 71 are the same action. A removal of one of these actions is preferable to gain time. A confirmation window 72 is shown on the user interface screen 700 in order to let the operator confirm a removal of one of the actions, i.e. the last planned action PR1 in time frame 71.

When the operator presses the YES button of the confirmation window 72, the print controller will remove the action PR1 in time frame 71.

When the operator presses the NO button of the confirmation window 72, the print controller will leave the print queue as it is. The visualization of the print queue will stay the same as in user interface window 700.

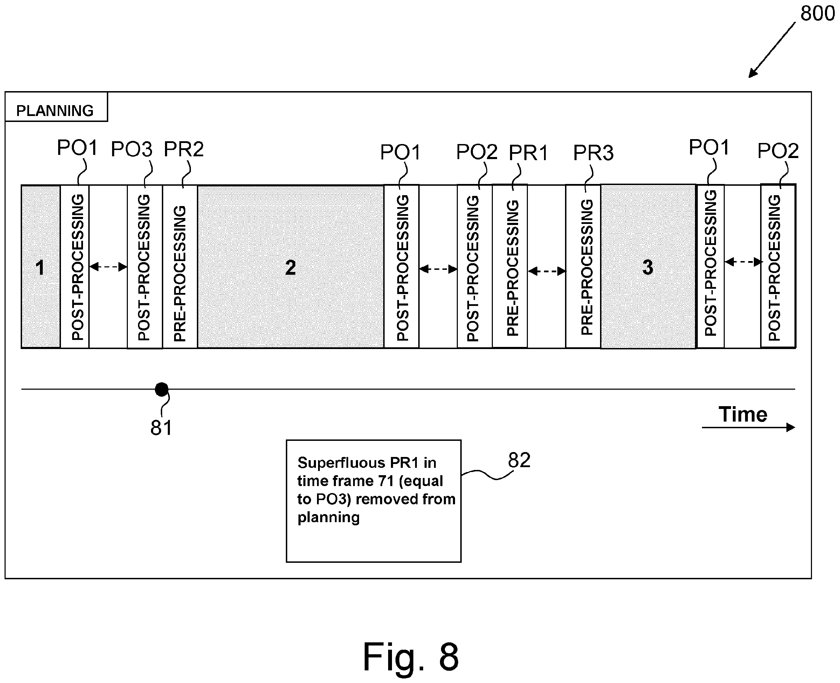

Fig. 8 shows the result of the confirmation (after the YES button of confirmation window 72 is pressed) by the operator on a user interface screen 800. In the visualization of the print queue the action PR1 in time frame 71 is removed from the print queue as indicated by the time dot 81.

In a confirmation window 82 the print controller states that the action PR1 in time frame 71 which equals PO3 is removed from the planning, i.e. the print queue.

The post-processing action PO3 may be a printer colour calibration after the processed print job 1 and the pre-processing action PR1 may be a same printer colour calibration before the next print job 2 which is still to be processed.

Figs. 3, 5 and 7 show confirmation windows 32, 52, 72 respectively in order to let the operator confirm a replacement proposed by the print controller. However, in an alternative embodiment the print controller automatically replaces a detected action by the appropriate actions in the print queue or even automatically removes the detected actions from the print queue when desirable.

Other examples of pre-processing actions and post-processing actions which may be replaced according to the method of the present invention are multiple maintenance tasks which require emptying the ink holders, like flushing, and refilling the ink holders. Such kind of operations may be planned for a long period of time, for example next week or month.

According to another embodiment the method comprises the step of re-arranging pre-processing actions and post-processing actions of print jobs in the print queue to get an optimal performance of the printer. For example, a first action is scheduled before a second action, while it is more efficient to perform the first action after the second action. In such a case the method comprises the step of re-arranging the first and second action in the more efficient sequence order. For example, a hard media is cut before the printing action instead of post-processing the hard media by cutting it after the printing in order to avoid chipping the ink if you cut it after printing.

According to an embodiment the method comprises the step of the print controller saving the print job together with the replaced pre-and/or post-processing actions in order to use the same print job later again in the planning. This is advantageous when a rush print job comes in and the replaced pre-processing and/or post-processing actions have to be reestablished again.

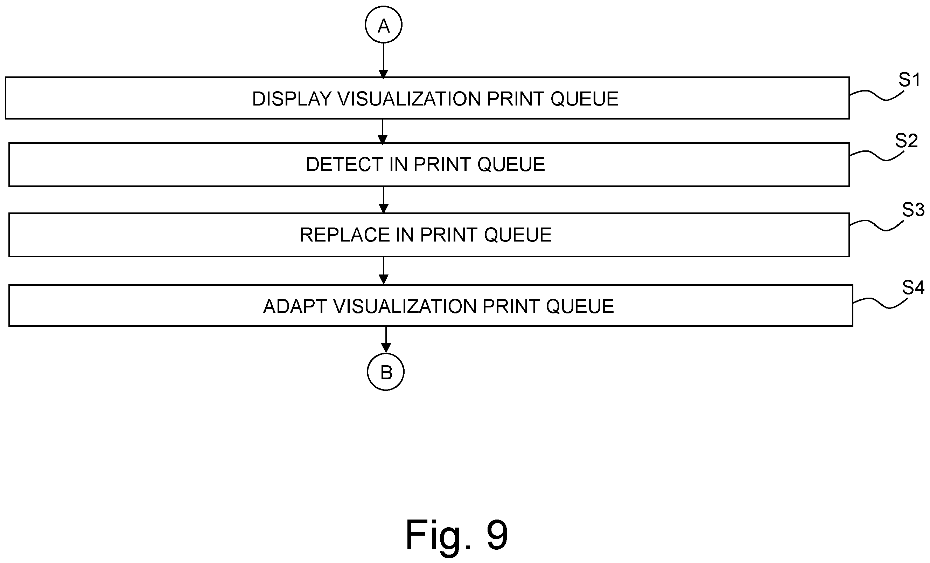

Fig. 9 shows a flow diagram of the method according to the present invention. The method starts in a starting point A which leads to a first step S1.

In the first step S1 a visualization of the print queue is shown comprising for each print job in the print queue a time sequence of the at least zero pre-processing actions being succeeded by a printing action being succeeded by the at least zero post-processing actions.

In a second step S2 The print controller detects in the print queue a pre-processing or post-processing action of a first print job which is followed by a pre-processing or post-processing action of a second print job succeeding the first print job, wherein the pre-processing or post-processing action of the first print job and the pre-processing or post-processing action of the second print job are suitable to be combined in at least zero combination actions which take less time and/or waste than a total of said two combinable actions.

In a third step S3 the pre-processing or post-processing action of the first job and the pre-processing or post-processing action of the second job are replaced by the at least zero combination actions in the print queue while taking the less time and/or waste of the at least zero combined actions into account.

In a fourth step S4 the visualization of the print queue is adapted accordingly.

The method according to the present invention may be applied in various situations. A first one is when the control mechanism operates at the interface of a single printer and a single operator console for that printer. In fact, the operator will be relieved from such tasks as continually monitoring the various print jobs, in that the invention provides for through appropriate system commands amending various aspects of the overall system to suit job-associated and/or external requirements, that may apply either at the beginning of a print job, such as by specifying a default feeding tray, or at the end of a print job, such as by defining finishing parameters.

The present invention can also be applied in a more extended setup, such as when a printer server is arranged for serving a plurality of printers that each have their own print queues with respectively associated pre-processing and post-processing actions. For example, a scanner and a plurality of printers are connected to the server via a local network. The server is also connected to an external network for communicating with user workstations.

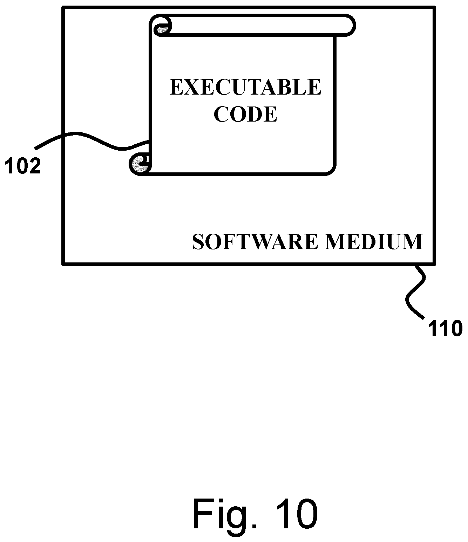

Fig. 10 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A method for managing a printer that comprises a print queue of print jobs which are created by specifying for each print job print data, a set of pre-processing parameters, and a set of post-processing parameters, and the print queue comprises for each print job besides the print action pre-processing actions and post-processing actions determined by the set of pre-processing parameters and the set of post-processing parameters respectively, the method comprising the step of
displaying a visualization of the print queue comprising for each print job in the print queue a time sequence of the at least zero pre-processing actions being succeeded by a printing action being succeeded by the at least zero post-processing actions,
wherein the method is **characterised by** the steps of
detecting in the print queue a pre-processing or post-processing action of a first print job which is followed by a pre-processing or post-processing action of a second print job succeeding the first print job, wherein the pre-processing or post-processing action of the first print job and the pre-processing or post-processing action of the second print job are suitable to be combined in at least zero combination actions which take less time and/or waste than a total of said two combinable actions,
replacing the pre-processing or post-processing action of the first job and the pre-processing or post-processing action of the second job by the at least zero combination actions in the print queue while taking the less time and/or waste of the at least zero combined actions into account, and
adapting the visualization of the print queue accordingly.

2. A method according to claim 1, wherein the pre-processing or post-processing action of the first print job and the pre-processing or post-processing action of the second print job obviate each other, and the method comprises the steps of removing the pre-processing or post-processing action of the first print job from the print queue, removing the pre-processing or post-processing action of the second print job from the print queue.

3. A method according to claim 1, wherein the pre-processing or post-processing action of the first print job and the pre-processing or post-processing action of the second print job obviate are equal, and the method comprises the steps of removing either the pre-processing or post-processing action of the second print job from the print queue or the pre-processing or post-processing action of the first print job.

4. A method according to claim 1, wherein the pre-processing or post-processing action of the first print job and the pre-processing or post-processing action of the second print job are suitable to be combined in at least one combined action that takes less time and/or less waste, and the method comprises the step of combining the pre-processing or post-processing action of the first print job with the pre-processing or post-processing action of the second print job in the at least one combined action.

5. A method according to any one of the preceding claims wherein the second print job is directly succeeding the first print job and the pre-processing or post-processing action of the first print job and the pre-processing or post-processing action of the second print job which are suitable to be combined are a post-processing action of the first print job and a pre-processing action of the second print job.

6. A method according to claim 5, wherein the printer is a flatbed printer and the post-processing action of the first print job is a removal of a jig from a print table of the flatbed printer and the pre-processing action of the second job is a preparation of a same jig on the print table of the flatbed printer.

7. A method according to any of the preceding claims, wherein the method comprises the steps of reorganizing the sequence order of the print jobs in the print queue in order to increase the number of combinable succeeding post-processing or pre-processing actions of print jobs in the print queue.

8. A method according to any of the preceding claims, wherein the method comprises the step of displaying near the visualization of the print queue an advice for the operator or user of the printing system in order to confirm or to refute the replacement of the pre-processing or post-processing action of the first job and the pre-processing or post-processing action of the second job by the at least zero combination actions in the print queue.

9. A method according to any of the preceding claims, wherein the method comprises the step of the print controller saving the first print job together with the replaced pre-and/or post-processing actions in order to use the same first print job later again.

10. A printer control mechanism being arranged for implementing a method as claimed in any one of the preceding claims.

11. A printer server comprising a mechanism as claimed in claim 10 and being arranged for serving one or more physically distinct printers.

12. A printer comprising a printer control mechanism as claimed in claim 10.

13. A computer program product containing a computer readable program for implementing a method as claimed in any of the claims 1 - 9.
